# EUROPÄISCHE PATENTSCHRIFT

(11) **EP 1 331 137 B1**
(45) Veröffentlichungstag und Bekanntmachung des Hinweises auf die Patenterteilung: **20.06.2007**
(21) Anmeldenummer: 03001691.9
(22) Anmeldetag: 25.01.2003
(51) Int. Cl.: B60R 9/00, B60R 9/04

(54) **Verfahren zum Herstellen eines mehrteiligen Trägersystems, insbesondere einer Dachreling eines Fahrzeugs, und entsprechendes Trägersystem**
Method for producing a multiple part carrier system, particularly roof rail of a vehicle, and corresponding carrier system
Procédé pour produire un système de porteur à plusieurs parties, en particulier rails de toit d'un véhicule, et système de porteur correspondant

(30) Priorität: 28.01.2002 DE 10203912
(43) Veröffentlichungstag der Anmeldung: 30.07.2003
(73) Patentinhaber: Hans und Ottmar Binder GmbH Oberflächenveredelung, 89558 Böhmenkirch (DE)
(72) Erfinder: Binder Hans, 89558 Böhmenkirch (DE)
(74) Vertreter: Grosse, Rainer

(56) Entgegenhaltungen:
- EP-A- 0 631 904
- EP-A- 1 092 591

## Beschreibung

Die Erfindung betrifft ein Verfahren zum Herstellen eines mehrteiligen Trägersystems, insbesondere einer Dachreling eines Fahrzeugs, wobei hierzu mindestens zwei voneinander getrennte Trägersystem-Rohteile hergestellt werden, gemäß Oberbegriff des Anspruchs 1.

Ferner bezieht sich die Erfindung auf ein Trägersystem entsprechend Oberbegriff des Anspruchs 8.

Ein Verfahren und ein Trägersystem der eingangs genannten Art sind bereits bekannt. Hierbei kann ein Trägersystem allgemein eine Reling, ein Dachträger, eine Dachleiste oder ähnliches, insbesondere eines Fahrzeugs, sein. Eine Reling (beispielsweise eine Dachreling) eines Fahrzeugs kann zum Beispiel als dreiteilige Reling ausgebildet sein, wobei alle drei Einzelteile voneinander getrennt fertigbearbeitet und zur Ausbildung einer mehrteiligen, stabilen Reling anschließend miteinander verbunden werden. Dabei besteht die Einzelteilbearbeitung darin, dass die Reling-Rohteile entgratet, geschliffen, gebürstet und anschließend poliert werden. Eine darauffolgende Oberflächenbeschichtung der bearbeiteten Reling-Einzelteile kann beispielsweise mittels Grundieren, Chromatieren, Pulverbeschichten, Lackieren, Verchromen und/oder Eloxieren erfolgen. Abschließend werden die endbearbeiteten Relingteile miteinander montiert unter Ausbildung einer kompletten Reling.

Ein Verfahren gemäß den Oberbegriff des Anspruchs 1 und ein Trägersystem hergestellt mittels dieses Verfahrens ist aus EP-A-1 092 591 bekannt.

Dieses Herstellungsverfahren einer mehrteiligen Reling ist nachteilig, da in Verbindungsbereichen zwischen den Relingteilen, das heißt beispielsweise zwischen einem Mittelteil (Galerieträger) und zwei, an einer zugehörigen Endseite des Mittelteils verbundenen Endteilen, eine jeweils augenscheinlich deutlich sichtbare Fuge ausgebildet ist. Diese Fuge in einem jeweiligen Verbindungsbereich der mehrteiligen Reling ist durch einen Absatz in Form eines Kantensprungs und/oder durch einen augenscheinlich direkt wahrnehmbaren Spalt gekennzeichnet. Ein Nachbearbeiten dieses Verbindungsbereichs zur Eliminierung der optisch per Augenscheinnahme erkennbaren Fugen einer mehrteiligen Reling ist in der Regel nicht mehr möglich beziehungsweise mit unverhältnismäßig hohem Aufwand verbunden. Somit ergibt sich bei diesem bekannten Herstellungsverfahren einer mehrteiligen Reling eine nicht zufriedenstellende, relativ hohe Ausschussquote, da ein Einsatz einer mehrteiligen Reling mit einer deutlich sichtbaren Fuge inakzeptabel ist aufgrund der besonders hohen Qualitätsansprüche bei Fahrzeugen.

Gemäß dem Stand der Technik wird alternativ zur Vermeidung einer sichtbaren Fuge eine einteilige Reling verwendet, welche mittels des an sich bekannten IHU-Verfahrens (Industrielle-Hydro-Umformung) unter Verwendung von Strangpressprofil aus geeignetem Material hergestellt wird. Das hierdurch erzielte einteilige Reling-Rohteil wird anschließend entsprechend der Bearbeitung der oben erwähnten Einzelteile einer mehrteiligen Reling entgratet, geschliffen, gebürstet und/oder poliert, wobei eine zusätzliche Oberflächenbeschichtung mittels Chromatieren, Grundieren, Pulverbeschichten, Lackieren, Verchromen und/oder Eloxieren erfolgen kann. Auch dieses Herstellungsverfahren einer einteiligen Reling ist nachteilig, da die Herstellung einer einteiligen Rohteil-Reling fertigungstechnisch verhältnismäßig aufwendig ist und relativ hohe Investitionen im Bereich der notwendigen Produktionsanlagen und Werkzeugkosten voraussetzt. Im Vergleich zu einer mehrteiligen Reling ergibt sich im Rahmen der Rohteilfertigung eine deutliche Herstellungsverteuerung von mehr als 35 %. Darüber hinaus sind bei einer einteiligen Reling die Möglichkeiten hinsichtlich ihrer Form- beziehungsweise Designgebung sehr eingeschränkt, da bei dem eingesetzten Rohteil-Herstellungsverfahren fertigungstechnische Restriktionen zu berücksichtigen sind, welche sich maßgeblich auf die konstruktive Ausgestaltung der einteiligen Reling auswirken. Dies führte zu einer nicht zufriedenstellenden Uniformität von herstellbaren einteiligen Relings, was einem durch Produktunterschiede gekennzeichneten Wettbewerb entgegensteht.

Es ist Aufgabe der Erfindung, ein Verfahren der eingangs genannten Art vorzuschlagen, mittels welchem ein mehrteiliges Trägersystem ohne augenscheinlich deutlich sichtbare Fugen hergestellt werden kann und bei welchem gleichzeitig eine zufriedenstellende Formgebungsvielfalt des Trägersystems gewährleistet ist.

Ferner ist es Aufgabe der Erfindung, ein entsprechend hergestelltes Trägersystem bereitzustellen.

Die Aufgabe wird gelöst durch ein Verfahren mit den Merkmalen des Anspruchs 1 und durch ein Trägersystem mit der Merkmalen des Anspruchs 8.

Gemäß diesem neuen Verfahren werden somit die geeignet vorbearbeiteten Trägersystem-Rohteile miteinander verbunden zur Ausbildung eines mehrteiligen Rohteil-Trägersystems, welches allerdings wie ein einteiliges Trägersystem gespannt und fertigbearbeitet werden kann. Aufgrund der Fertigbearbeitung des bereits vormontierten Rohteil-Trägersystems ist es in fertigungstechnisch verhältnismäßig einfacher Weise möglich, die grundsätzlich unerwünschte Bildung von optisch deutlich (direkt) sichtbaren Fugen in den Verbindungsbereichen zwischen den miteinander verbundenen Trägersystem-Einzelteilen (in der Regel zwei Endteile und ein zwischenangeordnetes Mittelteil) zu vermeiden. Da die Trägersystem-Einzelteile im Rahmen der Rohteilfertigung im Gegensatz zu einem einteiligen Trägersystem voneinander getrennt hergestellt werden können, ist es dabei gleichzeitig möglich, das mehrteilige Trägersystem hinsichtlich seiner Form- beziehungsweise Designgebung vielfältig auszugestalten. Das erfindungsgemäße Verfahren vereinigt somit die Qualitäts- und Bearbeitungsvorteile eines einteiligen Trägersystems mit den konstruktiven Gestaltungsvorteilen eines mehrteiligen Trägersystems.

Die Herstellung der Trägersystem-Rohteile erfolgt mit Vorteil mittels eines Strangpress-, Druckgieß und/oder Schmiedeverfahrens. Dabei wird das Mittelteil vorzugsweise mit einem geeigneten Strangpressverfahren unter Ausbildung eines Hohlprofils hergestellt, während die Endteile mittels eines geeigneten Druckgieß- oder Schmiedeverfahrens hergestellt werden. Diese Verfahren zur Herstellung von Trägersystem-Rohteilen sind an sich bekannt, so dass auf deren detaillierte Beschreibung verzichtet wird.

Vorzugsweise beinhaltet das Vorbearbeiten ein Entgraten insbesondere der Verbindungskanten der Trägersystem-Rohteile. Das Entgraten dient dazu, die miteinander zu verbindenden Trägersystem-Rohteile derart vorzubearbeiten, dass selbige definiert miteinander verbindbar sind unter Ausbildung eines Rohteil-Trägersystem. Die Feinbearbeitung des mehrteiligen Trägersystems erfolgt somit erst nach einer Vormontage der Trägersystem-Rohteile, im Gegensatz zum Stand der Technik, gemäß welchem bei einem mehrteiligen Trägersystem die voneinander getrennten Trägersystem-Rohteile komplett fertigbearbeitet und anschließend miteinander verbunden werden. Da gemäß der vorliegenden Erfindung die Fertigbearbeitung des mehrteiligen Trägersystems an einer vorbearbeiteten und vormontierten Rohteil-Baugruppe erfolgt, dient das Entgraten (Vorbearbeitung) insbesondere der Verbindungskanten der Trägersystem-Rohteile lediglich dazu, eine definierte Vormontage derselben zu ermöglichen. Die Bearbeitung der Sichtflächen des mehrteiligen Trägersystems erfolgt dagegen erst nach erfolgter Vormontage der Trägersystem-Rohteile unter Ausbildung des Rohteil-Trägersystems.

Gemäß einer bevorzugten Ausführungsvariante erfolgt das Verbinden der zwei vorbearbeiteten Trägersystem-Rohteile mittels einer Verklebung, einer Verpressung, einer Verstiftung, einer Vernutung und/oder mittels eines thermischen Fügeverfahrens. Mittels derartiger Verbindungsverfahren ist es in fertigungstechnisch verhältnismäßig einfacher Weise möglich, ein stabiles und somit geeignet weiterverarbeitbares Rohteil-Trägersystem herzustellen.

Mit Vorteil erfolgt das Spannen des Rohteil-Trägersystems mittels einer einzigen Spanneinrichtung, insbesondere mittels einer in Bezug auf das Rohteil-Trägersystem konturangepassten Schablone. Das "Handling" eines vormontierten Rohteil-Trägersystems ist im Vergleich zum "Handling" von drei Einzelrohteilen fertigungstechnisch weniger aufwendig. Es ist ein kostengünstigerer Produktionsablauf hinsichtlich der Trägersystem-Herstellung erzielbar, da lediglich ein Bauteil zur Fertigungsbearbeitung eines Trägersystems einem "Handling" zu unterziehen ist. Ferner können mehrere gleichartige Einzelteil-Prozessschritte zusammengefasst werden, da die Sichtflächen der Endteile und des zwischenangeordneten Mittelteils des Rohteil-Trägersystems gleichartig bearbeitet werden können. Darüber hinaus ergibt sich ein vereinfachter innerbetrieblicher Werkstücktransport (nach der Vormontage des Rohteil-Trägersystems wird nur noch ein Bauteil bewegt statt, wie im Stand der Technik, mehrere noch voneinander getrennte Bauteile eines vergleichbaren mehrteiligen Trägersystems). Dabei ergibt sich auch eine Einsparung hinsichtlich der Transportmittel (zum Beispiel Transportbehälter). Bei einem mehrteiligen Trägersystem gemäß dem Stand der Technik ergaben sich bisher sechzehn potentielle Möglichkeiten einer Ausschussgenerierung, da die jeweiligen Fügestellen zwischen den Endteilen und dem Mittelteil eines dreiteiligen Trägersystems ausschusskritisch sind und eben diese Fügestellen (Kanten) vier Fertigungsschritten unterzogen wurden bis zur Fertigstellung eines Trägersystems. Gemäß dem erfindungsgemäßen Herstellungsverfahren dagegen ergeben sich lediglich vier Möglichkeiten einer Ausschussgenerierung eines dreiteiligen Trägersystems. Dies führt zu einer maßgeblichen Erhöhung der Qualitätssicherheit, einer deutlichen Steigerung der Wertschöpfung des Produkts sowie zu einer Schonung der Umwelt durch Einsparung von Roh-, Betriebs- und/oder Hilfsstoffen.

Vorzugsweise beinhaltet das Fertigbearbeiten des Rohteil-Trägersystems ein Grobschleifen, Feinschleifen, Bürsten, Polieren, Grundieren, Chromatieren, Bepulvern, Lackieren, Verchromen und/oder Eloxieren. Dabei handelt es sich bei dem Grobschleifen, Feinschleifen, Bürsten und Polieren um eine Konturbearbeitung des Trägersystems zur Vorbereitung einer sogenannten "Finishbearbeitung" des Trägersystems. Die restlichen erwähnten Bearbeitungsschritte zählen somit zur Trägersystem-Finishbearbeitung. Dabei sind auch jeweils sinnvolle Kombinationen an erwähnten Bearbeitungsschritten möglich.

Vorteilhafterweise erfolgen die Verfahrensschritte automatisiert, insbesondere vollautomatisiert mittels geeigneter Produktionsmittel. Die jeweiligen Verfahrensschritte sind an sich bekannt, so dass auf deren detaillierte Beschreibung verzichtet wird.

Zur Lösung der Aufgabe wird auch ein Trägersystem mit den Merkmalen des Anspruchs 8 vorgeschlagen. Mittels eines derartigen dreiteiligen Trägersystems, insbesondere Dachreling eines Fahrzeugs, lassen sich die in Bezug auf das Herstellungsverfahren vorerwähnten Vorteile erzielen.

Mit Vorteil ist das Trägersystem in seinen Verbindungsbereichen augenscheinlich kantensprungfrei ausgebildet. Eine derart kantensprungfreie Sichtfläche eines Trägersystems erfüllt die an selbiges gestellten, verhältnismäßig hohen Qualitätsmaßstäbe.

Entsprechend einer bevorzugten Ausführungsform ist das Mittelteil ein Strangpresshohlprofil, insbesondere aus Aluminium, Magnesium, Messing, Stahl oder aus deren Legierung, und sind die Endteile als Druckguss- oder Schmiedeteile aus einer Aluminiumdruck-, Zinkdruck-, Kokillen-, Sand-, Messing-, Magnesium- oder Stahlguss-Legierung ausgebildet. Diese erwähnten Materialien eignen sich besonders zur Realisierung eines Trägersystems und sind diesbezüglich als Konstruktionswerkstoffe bereits bekannt.

Weitere vorteilhafte Ausgestaltungen der Erfindung ergeben sich aus der Beschreibung.

Die Erfindung wird nachfolgend in zwei Ausführungsbeispielen anhand zugehöriger Zeichnungen näher erläutert. Es zeigen:
- Figuren 1 und 2: eine schematische Darstellung einer Seitenansicht und einer Unteransicht eines Reling-Rohteils in Form eines Endteils gemäß einer ersten Ausführungsform;
- Figuren 3 und 4: eine schematische Teildarstellung jeweils zweier zu verbindender Reling-Rohteile gemäß einer zweiten Ausführungsform in verschiedenen Seitenansichten;
- Figur 5: eine schematische Querschnittsdarstellung eines Mittelteils der Reling der Figuren 3, 4 in vergrößertem Maßstab und
- Figuren 6 und 7: eine schematische Teildarstellung einer erfindungsgemäßen, fertigbearbeiteten Reling entsprechend der zweiten Ausführungsform in unterschiedlichen Seitenansichten.

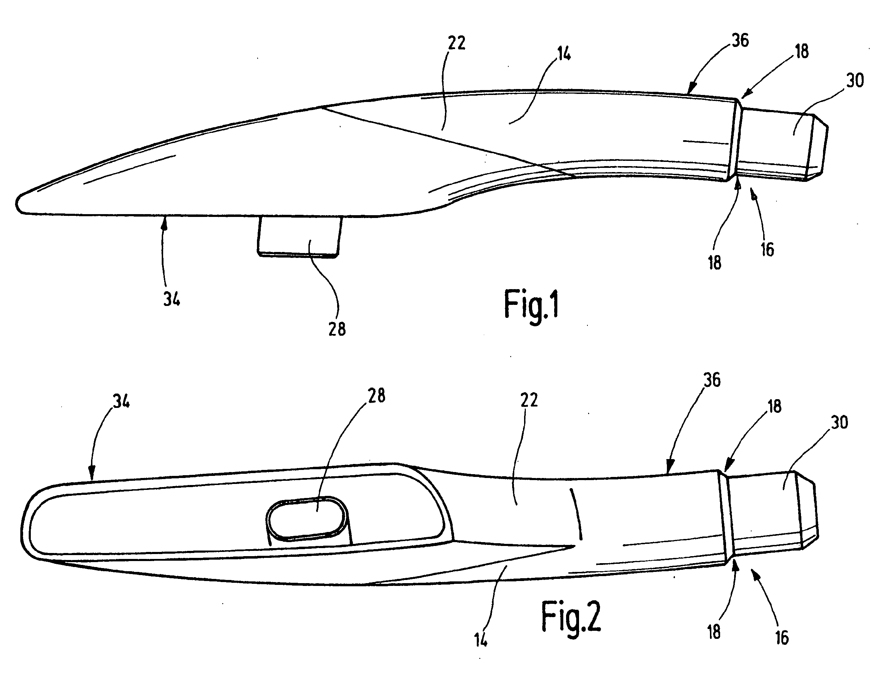

Die Figuren 1 und 2 zeigen in schematischer Darstellung eine erste Ausführungsform eines Endteils 22 eines Trägersystems, im vorliegenden Fall einer Reling, insbesondere Dachreling eines Fahrzeugs, wobei das Endteil 22 als Reling-Rohteil 14 ausgebildet ist. Figur 1 zeigt das Endteil 22 in einer Seitenansicht, während Figur 2 selbiges in einer perspektivischen Unteransicht zeigt. Das Endteil 22 weist einen Schaft 30 auf, welcher unter Ausbildung eines Absatzes in eine Sichtfläche 36 (Außenfläche einer fertigmontierten Reling) übergeht. Dabei wird der Absatz durch einen Verbindungsbereich 16 gebildet, der Verbindungskanten 18 (Verbindungsecken) aufweist. Der Schaft 30 dient dazu, in ein später eingehend beschriebenes, hohlprofilförmiges Mittelteil eingeschoben zu werden unter Ausbildung einer vormontierten Rohteil-Reling. Das Endteil 22 ist im vorliegenden Ausführungsbeispiel mit einem Befestigungsmittel 28 in Form eines Zapfens versehen. Im Falle einer Fahrzeug-Dachreling dient der Zapfen 28 zur Befestigung derselben an der Fahrzeugkarosserie (Fahrzeugdach). Hierzu ist das Endteil 22 mit einer stirnseitig umlaufenden Anlagefläche 34 versehen.

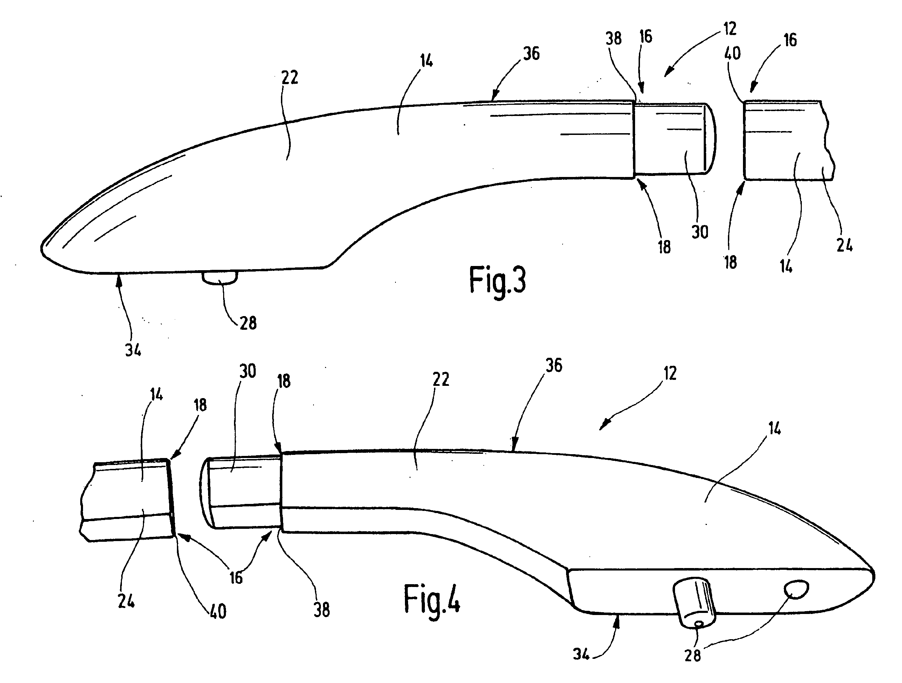

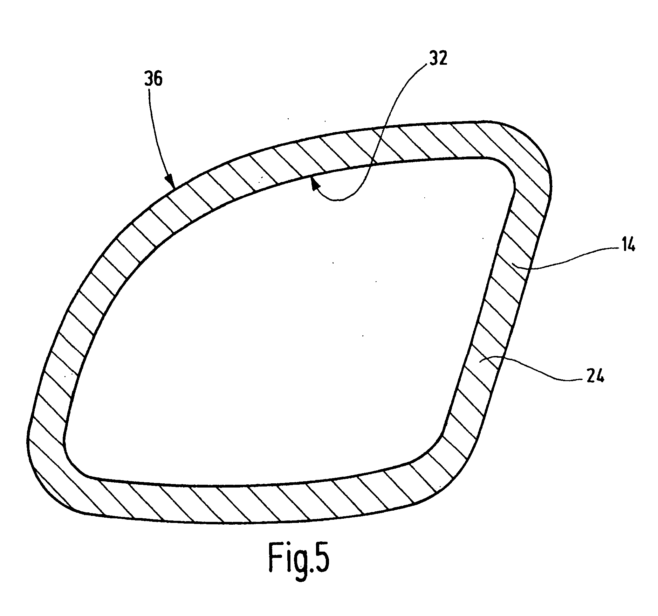

Die Figuren 3 und 4 zeigen in schematischen, unterschiedlichen Seitenansichten ein als Rohteil 14 ausgebildetes Endteil 22 entsprechend einer zweiten, alternativen Ausführungsform, welches mit einem Mittelteil 24, ebenfalls in Form eines Rohteils 14, vormontiert werden soll. Das Mittelteil 24 ist als Hohlprofil ausgebildet, wie in Figur 5 anhand eines Querschnitts des Mittelteils 24 in vergrößertem Maßstab dargestellt ist. Die Vormontage des Endteils 22 und des Mittelteils 24 (beides Rohteile 14) erfolgt derart, dass der Schaft 30 des Endteils 22 formschlüssig in das Innere des Mittelsteils 24 geschoben wird, so dass die in den Verbindungsbereichen 16 der beiden Rohteile 14 liegenden Verbindungskanten 18 miteinander in Anlagekontakt kommen. Hierzu ist das Endteil 22 und das Mittelteil 24 mittels einer geeigneten Entgratung insbesondere der Verbindungskanten 18 derart vorbearbeitet, dass beide Reling-Rohteile 14 miteinander definiert verbindbar sind. Zur Ausbildung einer mehrteiligen Rohteil-Reling 12, im vorliegenden Ausführungsbeispiel einer dreiteiligen Rohteil-Reling 12, werden somit zwei gegebenenfalls entgratete Endteile 22 mit dem zwischenangeordneten, ebenfalls eventuell entgrateten Mittelteil 24 durch Ineinanderschieben verbunden. Zur Ausbildung einer stabilen Rohteil-Reling 12 erfolgt die Verbindung der Einzelrohteile vorzugsweise mittels einer Verklebung, einer Verpressung, einer Verstiftung, einer Vernutung und/oder mittels eines thermischen Fügeverfahrens. Um ein problemloses Ineinanderstecken des Schafts 30 des Endteils 22 mit dem Mittelteil 24 zu ermöglichen, ist die Außenkontur des Schafts 30 an die Innenkontur 32 des Mittelteils 24 (Hohlprofil) komplementär angepasst. Da insbesondere die Verbindungskanten 18 der jeweils zwei zu verbindenden Rohteile 14 entgratet sind, können die Stirnflächen 38, 40 der entsprechenden Rohteile 14 bei Ausbildung einer Rohteil-Reling 12 miteinander bündig in Anlagekontakt gebracht werden. Das in den Figuren 3 und 4 dargestellte Endteil 22 weist bei dieser Ausführungsform als Befestigungsmittel 28 einen Zapfen und eine Bohrung auf. Das Endteil 22 ist ferner mit einer Anlagefläche 34 zur Befestigung der Reling beispielsweise an einem Fahrzeugdach versehen.

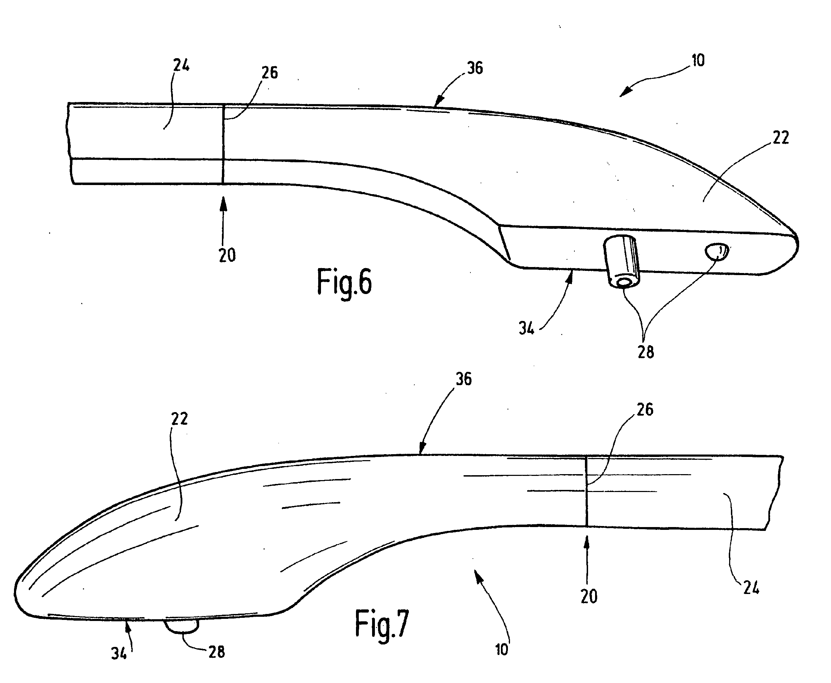

Die Figuren 6 und 7 zeigen in ebenfalls unterschiedlichen Seitenansichten eine teilweise dargestellte, fertigbearbeitete Reling 10 entsprechend der zweiten Ausführungsform (siehe auch Figuren 3, 4). Die Reling 10 weist als mehrteilige (dreiteilige) Reling Verbindungsbereiche 20 auf, die durch augenscheinlich absatzfreie, das heißt kantensprungfreie, Anschlagstellen 26 gekennzeichnet sind. Somit ist der jeweilige Übergang zwischen einem Endteil 22 und dem Mittelteil 24 nicht augenscheinlich als deutlich sichtbare Fuge zu erkennen, sondern erst bei besonders genauer Betrachtung lediglich als sogenannte "Scheinfuge". Dies ist insbesondere darauf zurückzuführen, dass ausgehend von einer Rohteil-Reling 12 die komplette Fertigbearbeitung der miteinander verbundenen Reling-Rohteile 14 erfolgt, so dass hierdurch gegebenenfalls auftretende Toleranzen bei der Rohteil-Einzelfertigung in fertigungstechnisch verhältnismäßig einfacher Weise und insbesondere automatisiert hinreichend ausgeglichen werden können.

Somit ist es vorteilhafterweise möglich, maximale Qualitätsanforderungen an eine Reling 10 in zuverlässiger Weise zu erfüllen und gleichzeitig sich ergebende Kostenvorteile aus der konventionellen Einzelteilfertigung hinsichtlich der Herstellung von Rohteilen zu nutzen. Aufgrund dieser kombinierten Einzelteilfertigung im Rahmen der Rohteilherstellung und Baugruppenbearbeitung im Rahmen der Oberflächenbearbeitung der Reling 10 ist es bei maximaler Sichtflächenqualität insbesondere in den Verbindungsbereichen 20 einer Reling 10 zusätzlich möglich, eine maximale Formenvielfalt hinsichtlich der Relinggestaltung zu gewährleisten. Es ergibt sich eine besonders niedrige Ausschussquote (< 5 %) bei der Relingherstellung unter optimaler Ausnutzung der Fertigungsressourcen. Da bereits nach dem Entgraten insbesondere der Verbindungkanten 18 die Reling-Rohteile 14 bereits vormontiert werden, kann die erhaltene Rohteil-Reling 12 einmalig mittels einer geeigneten Spanneinrichtung aufgespannt werden zur Weiter- und Fertigbearbeitung der Sichtflächen 36, so dass auch der Montageaufwand beim erfindungsgemäßen Verfahren erheblich reduziert ist.

## Patentansprüche

1. Verfahren zum Herstellen eines mehrteiligen Trägersystems, insbesondere einer Dachreling eines Fahrzeugs, mit folgenden Verfahrensschritten:
- Herstellen mindestens zweier voneinander getrennter Trägersystem-Rohteile,
- gegebenenfalls Vorbearbeiten der zwei Trägersystem-Rohteile (14) insbesondere in deren Verbindungsbereichen (16) unter Ausbildung zweier definiert miteinander verbindbarer Trägersystem-Rohteile (14);
- Verbinden der zwei vorbearbeiteten Trägersystem-Rohteile (14) unter Ausbildung eines Rohteil-Trägersystems (12);
- Spannen des Rohteil-Trägersystems (12) in einer Spanneinrichtung;
**gekennzeichnet durch** folgende Verfahrensschritte:
- Fertigbearbeiten des Rohteil-Trägersystems (12) unter Ausbildung des mehrteiligen Trägersystems (10) beinhaltend eine Konturbearbeitung des Trägersystems **durch** Grobschleifen, Feinschleifen und Bürsten oder Polieren.

2. Verfahren nach Anspruch 1, **dadurch gekennzeichnet, dass** die Herstellung der Trägersystem-Rohteile (14) mittels eines Strangpress-, Druckgieß- und/oder Schmiedeverfahrens erfolgt.

3. Verfahren nach einem der vorhergehenden Ansprüche, **dadurch gekennzeichnet, dass** das Vorbearbeiten ein Entgraten insbesondere der Verbindungskanten (18) der Trägersystem-Rohteile (14) beinhaltet.

4. Verfahren nach einem der vorhergehenden Ansprüche, **dadurch gekennzeichnet, dass** das Verbinden der zwei vorbearbeiteten Trägersystem-Rohteile (14) mittels einer Verklebung, einer Verpressung, einer Verstiftung, einer Vernutung und/oder mittels eines thermischen Fügeverfahren erfolgt.

5. Verfahren nach einem der vorhergehenden Ansprüche, **dadurch gekennzeichnet, dass** das Spannen des Rohteil-Trägersystems (12) mittels einer einzigen Spanneinrichtung, insbesondere mittels einer in Bezug auf das Rohteil-Trägersystem (12) konturangepassten Schablone erfolgt.

6. Verfahren nach einem der vorhergehenden Ansprüche, **dadurch gekennzeichnet, dass** das Fertigbearbeiten des Rohteil-Trägersystems (12) ein Grobschleifen, Feinschleifen, Bürsten, Polieren, Grundieren, Chromatieren, Bepulvern, Lackieren, Verchromen und/oder Eloxieren beinhaltet.

7. Verfahren nach einem der vorhergehenden Ansprüche, **dadurch gekennzeichnet, dass** die Verfahrensschritte automatisiert, insbesondere vollautomatisiert mittels geeigneter Produktionsmittel erfolgen.

8. Trägersystem, hergestellt mittels eines Verfahrens nach einem der vorhergehenden Ansprüche, **dadurch gekennzeichnet, dass** es ein dreiteiliges Trägersystem (10) ist mit zwei gekrümmten Endteilen (22) und einem zwischenangeordneten Mittelteil (24).

9. Trägersystem nach einem der vorhergehenden Ansprüche, **dadurch gekennzeichnet, dass** es in seinen Verbindungsbereichen (20) augenscheinlich kantensprungfrei ausgebildet ist.

10. Trägersystem nach einem der vorhergehenden Ansprüche, **dadurch gekennzeichnet, dass** das Mittelteil (24) ein Strangpresshohlprofil insbesondere aus Aluminium, Magnesium, Messing, Stahl oder aus deren Legierung ist und die Endteile (22) Druckguss- oder Schmiedeteile aus einer Aluminiumdruck-, Zinkdruck-, Kokillen-, Sand-, Messing-, Magnesium- oder Stahlguss-Legierung sind.

## Claims

1. A method for producing a multiple part carrier system, particularly a roof rail of a vehicle, comprising the following steps:
- producing at least two carrier system-raw parts separated from each other;
- if need be, premachining the two carrier system-raw parts (14), particularly in their connecting areas (16), thus forming two carrier system-raw parts (14) connectable to each other in a defined manner;
- connecting the two premachined carrier system-raw parts (14), thus forming a raw part-carrier system (12);
- clamping the raw part-carrier system (12) in a clamping device;
**characterized by** the following steps:
- finish-machining the raw part-carrier system (12), thus forming the multiple part carrier system (10), comprising contour machining the carrier system by rough-grinding, precision-grinding and brushing or polishing.

2. A method according to claim 1, **characterized in that** the production of the carrier system-raw parts (14) is carried out by an extrusion, die-casting and/or forging procedure.

3. A method according to any one of the preceding claims, **characterized in that** the step of premachining includes a deburring, particularly of the connecting edges (18) of the carrier system-raw parts (14).

4. A method according to any one of the preceding claims, **characterized in that** the step of connecting the two premachined carrier system-raw parts (14) is carried out by gluing, pressing, pinning, making a groove and tongue joint and/or by use of a thermal joining method.

5. A method according to any one of the preceding claims, **characterized in that** the step of clamping the raw part-carrier system (12) is carried out by means of a single clamping device, particularly by means of a template adapted to the contours of the raw part-carrier system (12).

6. A method according to any one of the preceding claims, **characterized in that** the step of finish-machining the raw part-carrier system (12) includes rough-grinding, precision grinding, brushing, polishing, priming, chromating, powder coating, lacquering, chromium plating and/or anodizing.

7. A method according to any one of the preceding claims, **characterized in that** the steps are carried out in an automated manner, particularly in a completely automated manner using appropriate means of production.

8. A carrier system, produced using a method according to any one of the preceding claims, **characterized in that** it is a three-part carrier system (10) with two bent end parts (22) and one middle part (24) arranged therebetween.

9. A carrier system according to any one of the preceding claims, **characterized in that** its connecting areas (20) present apparently flush joints.

10. A carrier system according to any one of the preceding claims, **characterized in that** the middle part (24) is an extruded hollow profile particularly made of aluminum, magnesium, brass, steel, or an alloy thereof, and that the end parts (22) are die-cast parts or forged parts made of a die-cast aluminum, die-cast zinc, permanent mold casting, sand casting, brass casting, magnesium casting or steel casting alloy.

## Revendications

1. Procédé pour fabriquer un système porteur à plusieurs parties, en particulier un rail de toit d'un véhicule, comprenant les étapes suivantes :
- fabriquer au moins deux pièces de départ pour un système porteur séparées l'une de l'autre ;
- si nécessaire, pré-usiner les deux pièces de départ du système porteur (14), en particulier dans leurs régions d'assemblage (16), formant ainsi deux pièces de départ du système porteur (14) adaptées pour être jointes l'une à l'autre de manière définie ;
- assembler les deux pièces de départ du système porteur (14) préusinées, formant ainsi un système porteur en pièces de départ (12)
- serrer le système porteur en pièces de départ (12) dans un dispositif de serrage ;
**caractérisé par** les étapes suivantes:
- finir le système porteur en pièces de départ (12), formant ainsi le système porteur à plusieurs parties (10), comprenant un usinage des contours du système porteur par dégrossissage, rectification fine et brossage ou polissage.

2. Procédé selon la revendication 1, **caractérisé en ce que** la fabrication des pièces de départ du système porteur (14) se fait par un procédé d'extrusion, de moulage sous pression, et/ou de forgeage.

3. Procédé selon l'une des revendications précédentes, **caractérisé en ce que** le pré-usinage comprend un ébavurage des bords d'assemblage (18) des pièces de départ du système porteur (14).

4. Procédé selon l'une des revendications précédentes, **caractérisé en ce que** l'assemblage des deux pièces de départ du système porteur (14) ainsi préusinées se fait par collage, pressage, goupillage, assemblage à rainure et languette et/ou au moyen d'un procédé d'assemblage thermique.

5. Procédé selon l'une des revendications précédentes, **caractérisé en ce que** le serrage du système porteur en pièces de départ (12) se fait par un seul dispositif de serrage, en particulier par un gabarit adapté aux contours du système porteur en pièces de départ (12).

6. Procédé selon l'une des revendications précédentes, **caractérisé en ce que** la finition du système porteur en pièces de départ (12) comprend un dégrossissage, une rectification fine, un brossage, un polissage, une application d'une couche de fond, une chromatation, un revêtement poudre, un vernissage, un chromage et/ou une anodisation.

7. Procédé selon l'une des revendications précédentes, **caractérisé en ce que** les étapes se déroulent de manière automatisée, en particulier de manière entièrement automatisée à l'aide de moyens de production appropriés.

8. Système porteur, fabriqué en utilisant un procédé selon l'une des revendications précédentes, **caractérisé en ce qu'**il est un système porteur à trois parties (10) avec deux parties terminales courbées (22) et une partie intermédiaire (24) intercalée entre les deux.

9. Système porteur selon l'une des revendications précédentes, **caractérisé en ce que** ses régions d'assemblage (20) présentent des joints apparemment affleurés.

10. Système porteur selon l'une des revendications précédentes, **caractérisé en ce que** la partie intermédiaire (24) est un profil creux extrudé, en particulier en aluminium, magnésium, laiton, acier ou un alliage de ces métaux, et que les parties terminales (22) sont des pièces moulées sous pression ou des pièces forgées en alliage d'aluminium moulé sous pression, de zinc moulé sous pression, coulé en coquille, coulé au sable, de laiton moulé, de magnésium moulé ou d'acier moulé.
